(19) Europäisches Patentamt
European Patent Office
Office européen des brevets

(11) **EP 3 640 586 A1**

(12) **DEMANDE DE BREVET EUROPEEN**

(43) Date de publication:
**22.04.2020 Bulletin 2020/17**

(51) Int Cl.:
*G01C 11/02* (2006.01)       *G06T 17/00* (2006.01)

(21) Numéro de dépôt: **19201285.4**

(22) Date de dépôt: **03.10.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.10.2018 FR 1859190**

(71) Demandeur: **Soletanche Freyssinet
92500 Rueil-Malmaison (FR)**

(72) Inventeurs:
• **PERAZIO, Guy
38160 SAINT-ROMANS (FR)**
• **PERAL, José
38430 MOIRANS (FR)**
• **VALCKE, Serge
38140 APPRIEU (FR)**
• **CHAMBAUD, Luc
38430 MOIRANS (FR)**

(74) Mandataire: **Nony
11 rue Saint-Georges
75009 Paris (FR)**

(54) **PROCÉDÉ D'ACQUISITION D'IMAGES**

(57)     Procédé d'acquisition d'images comportant le déplacement, en une pluralité d'emplacements d'acquisition (61,62), d'un dispositif d'acquisition (50) comportant au moins une caméra (5,65), et l'acquisition en chaque emplacement d'acquisition d'au moins une image d'une scène au moyen de la caméra,
chaque emplacement d'acquisition étant choisi de manière à ce que :
- les scènes (63, 64) vues par la caméra en deux emplacements d'acquisition consécutifs et les images (70,75) correspondantes se recouvrent au moins partiellement, et
- la densité surfacique de pixels attribuée à au moins un élément de la scène correspondante qui est représenté dans l'image correspondante par une portion à haute résolution (85a-c), soit supérieure à 50 %, de préférence supérieure à 80 % d'une densité surfacique cible, la densité surfacique de pixels étant définie comme le rapport de l'aire de l'élément projeté dans un plan perpendiculaire à l'axe optique de la caméra sur la quantité de pixels de la portion à haute résolution.

Fig. 2

## Description

L'invention concerne un procédé d'acquisition d'images de scènes d'un environnement et une méthode de construction d'un modèle numérique 3D à partir des images.

Pour afficher un modèle numérique d'une scène incluant un ensemble d'objets 3D réels, par exemple sur un écran ou au moyen d'un casque de réalité augmentée, il est connu de construire un nuage de point qui discrétise l'enveloppe externe de chacun des objets.

Pour cela, une méthode connue consiste à acquérir des images au moyen d'une ou plusieurs caméras disposées en différents emplacements d'acquisition et/ou selon différentes directions d'observations, puis à générer le nuage de points à partir des images, par exemple par stéréoscopie.

Le problème associé à cette méthode est que bien qu'elle soit capable de rendre compte avec une bonne résolution des détails des objets disposés auprès de la caméra, ceux disposés au loin sont quant à eux reproduits avec une plus faible résolution, liée à leur éloignement de la caméra. En effet, la résolution d'un pixel, qui est proportionnelle à l'inverse de la dimension d'une partie d'un objet qui est imagée par un pixel, diminue à mesure que la distance entre la caméra et l'objet augmente. Ainsi, pour une définition d'image donnée, définie en nombre de lignes et de colonnes de pixels définissant l'image, l'image peut comporter des pixels de résolutions différentes en fonction de la distance entre la caméra ayant acquis l'image et du ou des objets à imager.

Ainsi, lors de l'affichage du modèle numérique 3D, un utilisateur peut observer un corps virtuel, généré pour l'affichage du modèle numérique, qui peut lui apparaître visuellement mal détaillé, même en s'approchant virtuellement au plus près du corps virtuel, ce corps représentant un objet disposé loin de la caméra lors de l'acquisition des images.

L'invention vise à surmonter les inconvénients décrits ci-dessus et propose à cet effet un procédé d'acquisition d'images comportant le déplacement, en une pluralité d'emplacements d'acquisition, d'un dispositif d'acquisition comportant au moins une caméra, et l'acquisition en chaque emplacement d'acquisition d'au moins une image d'une scène au moyen de la caméra, chaque emplacement d'acquisition étant choisi de manière à ce que :

- les scènes, vues par la caméra en deux emplacements d'acquisition consécutifs et les images correspondantes se recouvrent au moins partiellement, et
- la densité surfacique de pixels attribuée à au moins un élément de la scène correspondante qui est représenté dans l'image correspondante par une portion à haute résolution, soit supérieure à 50 %, de préférence supérieure à 80 % d'une densité surfacique cible, la densité surfacique de pixels étant définie comme le rapport de l'aire de l'élément projeté dans un plan perpendiculaire à l'axe optique de la caméra sur la quantité de pixels de la portion à haute résolution.

Une banque d'images comportant des images des scènes acquises peut ainsi avantageusement être formée, et on s'assure ainsi que chaque image de la banque comporte une portion à haute résolution. Le procédé d'acquisition selon l'invention rend ainsi possible la création d'un modèle 3D d'un environnement avec une résolution sensiblement homogène, en se basant sur les portions à haute résolution de chaque image, et en écartant les portions définies avec une résolution plus faible.

Lorsque le modèle 3D est affiché, un observateur, qui se déplace virtuellement entre les corps générés, peut ainsi les observer avec sensiblement le même niveau de détail.

La portion à haute résolution représente de préférence plus de 20 % du nombre total de pixels définissant l'image. Elle peut représenter moins de 100 %, moins de 90 %, moins de 80 %, voire moins de 50 % du nombre total de pixels définissant l'image. L'image peut comporter une portion à basse résolution qui représente le complément, en nombre de pixels de l'image, de la portion à haute résolution.

La densité surfacique de pixels attribuée à l'élément de la scène correspondante qui est représenté dans l'image correspondante par la portion à haute résolution peut être supérieure à la densité surfacique cible.

La densité surface de pixels attribuée à un élément, par exemple un objet, de la scène représenté dans une image correspond au nombre de pixels représentant l'élément dans l'image, divisé par l'aire de l'élément. Elle peut être exprimée en $px.mm^{-2}$ [pixels par millimètre carré]. Par exemple, dans une image présentant une portion à haute résolution dans laquelle est représenté un objet avec N pixels, la densité surfacique attribuée à l'élément est de N pixels par millimètre carré de surface de l'élément.

La « densité surfacique cible » est déterminée par l'opérateur mettant en oeuvre le procédé d'acquisition, par exemple préalablement ou au cours de l'acquisition.

Par souci de concision, on dénomme « densité surfacique de pixels de la portion à haute résolution » la densité surfacique de pixels attribuée à au moins un élément de la scène qui est représenté dans l'image correspondante par une portion à haute résolution.

Une « scène » est une partie d'un environnement pouvant être observé par un dispositif d'acquisition d'images lorsque celui-ci est immobile à un emplacement d'acquisition donné. Une scène peut comporter au moins un, de préférence plusieurs éléments, notamment un objet. L'objet peut être un ouvrage, par exemple un pont ou un tunnel, un immeuble, une maison, un stade, un navire, un entrepôt, un meuble urbain, par exemple un abribus, un article ornemental, un panneau de signalisation, un feu de signalisation, un mur, une paroi par exemple d'une galerie, ou une partie de ceux-ci. L'objet peut être un élément naturel, par exemple un arbre, un rocher, une montagne, une paroi d'une grotte.

Par ailleurs, l'opérateur sait, de façon routinière déterminer les emplacements d'acquisition pour assurer que la densité surfacique de pixels de la portion à haute résolution soit conforme à l'invention.

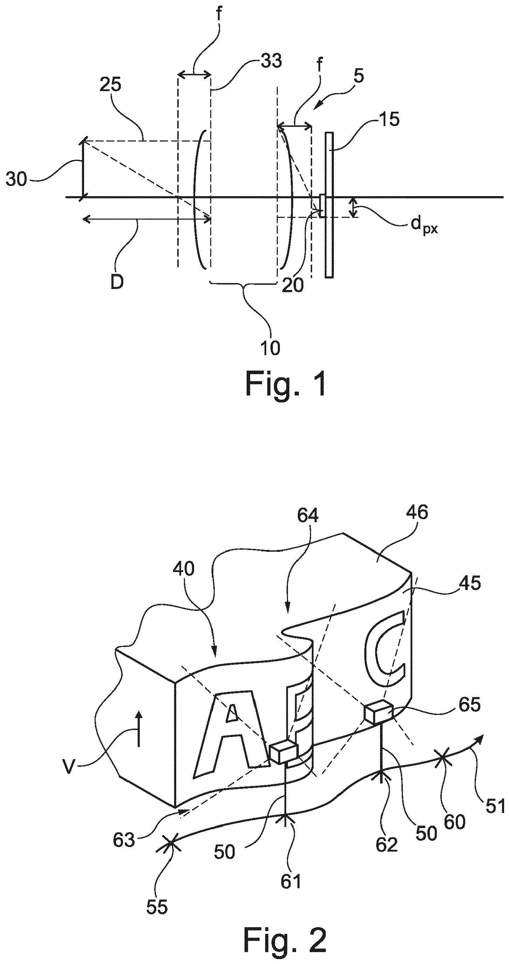

Comme illustré schématiquement sur la figure 1, une caméra 5 comporte un objectif 10 et un capteur 15 doté de photosites 20. Chaque photosite reçoit une portion du rayonnement 25 en provenance d'un objet 30 à imager passant à travers l'objectif et la convertit en information, généralement colorimétrique, à attribuer à un pixel correspondant dans l'image.

La densité surfacique p associée à un élément d'une scène dans une image dépend de la distance focale f de l'objectif, de la distance $D$ entre le plan principal objet 33 de l'objectif de la caméra et l'élément, et de la taille $d_{px}$ du photosite sur le capteur de la caméra définissant un pixel. Elle est exprimée par la relation (1) suivante:

$$\rho = \left[\frac{f}{d_{px}(D-f)}\right]^2 \quad (1)$$

L'homme du métier peut aisément déterminer, connaissant la distance focale de l'objectif et de la taille du photosite, la densité surfacique associée à un élément d'une scène, par simple mesure de la distance entre l'élément et le dispositif d'acquisition.

Par exemple, lorsque le plan principal objet de la caméra est disposé à une distance D égale à 5 m du plus proche objet d'une scène, pour une taille de photosite $d_{px}$ = 1 μm et pour une distance focale d'objectif de la caméra de 50 mm, la densité surfacique p associée à l'objet est d'environ 102 px.mm$^{-2}$ .

Ainsi, après avoir déterminé une densité surfacique $\rho_{min}$ d'une portion à haute résolution d'une image à acquérir, l'homme du métier sait qu'il doit positionner le dispositif d'acquisition par rapport à l'objet le plus proche de manière à assurer que la distance D remplisse la condition (2) suivante:

$$D \leq f\left(1+\frac{1}{\sqrt{\rho_{min}}d_{px}}\right) \quad (2)$$

Autrement dit, l'homme du métier, après avoir choisi la densité surfacique cible qu'il souhaite atteindre, connaît par exemple la distance, mesurée entre un élément de la scène et le dispositif d'acquisition, en dessous de laquelle l'élément sera représenté avec une densité surfacique de pixels supérieure à la densité surfacique cible.

Le procédé peut donc comporter, préalablement à l'acquisition des images, la mesure de la distance entre au moins un élément de la scène à acquérir et le plan principal objet de l'objectif de la caméra, et la vérification de la condition (2). La mesure est par exemple effectuée au moyen d'un télémètre, par exemple à visée laser, monté sur le dispositif d'acquisition.

De préférence, la densité surfacique cible est supérieure ou égale à 50 px.mm$^{-2}$ [pixels par millimètre carré], de préférence supérieure ou égale à 60 px.mm$^{-2}$, mieux comprise entre 70 px.mm$^{-2}$ et 100 px.mm$^{-2}$. Un modèle 3D peut ainsi être construit avec une haute résolution, notamment proche ou supérieure à celle que l'œil humain est apte à détecter. Un observateur peut ainsi observer dans l'affichage du modèle 3D les mêmes détails que s'il était observait l'environnement, d'un même point de vue.

La densité surfacique de pixels peut être supérieure à 90 %, mieux à supérieure à 95 % de la densité surfacique cible. Elle peut être inférieure à inférieure à 110 %, notamment inférieure à 105 % de la densité surfacique cible.

Les scènes vues par la caméra en deux emplacements d'acquisition consécutifs et les images correspondantes se recouvrent au moins partiellement. Le recouvrement des images facilite la discrétisation des scènes, notamment par photogrammétrie. De préférence, le taux de recouvrement entre lesdites images est supérieur à 70 %, voire supérieur à 80 %, par exemple supérieur à 90 %. Le taux de recouvrement peut être calculé:

- optionnellement, en projetant l'une des deux images dans un plan dont la normale est parallèle à l'axe de vue de la caméra dans la position dans laquelle a été prise l'autre image, puis
- en appariant, par exemple par corrélation d'images, l'image, optionnellement projetée, et l'autre image acquise, de manière à déterminer la zone commune entre l'image, optionnellement projetée, et l'autre image, et
- en exprimant en pourcentages, le rapport du nombre de pixels de la zone appariée sur le nombre de pixels de l'autre image.

Par exemple, l'étape de projection décrite ci-dessus est effectuée lorsque l'angle entre les axes de vues de la caméra aux emplacements d'acquisition consécutifs est supérieur à 5°.

De préférence, le dispositif d'acquisition comporte une pluralité de caméras disposées pour acquérir en un même emplacement d'acquisition des images respectives qui se recouvrent entre elles. Le dispositif d'acquisition peut notamment comporter au moins deux caméras, de préférence au moins cinq caméras, de préférence au moins dix caméras, mieux au moins quinze caméras, les caméras acquérant chacune une image de la scène correspondante selon un axe de vue différent des autres, les images ainsi acquises d'une même scène se recouvrant entre elles. De cette manière, la construction du modèle 3D est facilitée, ces images pouvant être plus facilement corrélées entre elles, par exemple par photogrammétrie.

Les caméras peuvent être synchronisées de manière à acquérir des images au même instant. Le traitement ultérieur des images en est ainsi facilité.

De préférence, le dispositif d'acquisition comporte un module d'acquisition comportant une canne et au moins deux étages d'acquisition disposés à des hauteurs différentes sur la canne, chaque étage d'acquisition comportant une pluralité de caméras configurées pour acquérir chacune une image de la scène, les axes de vue des caméras d'un étage d'acquisition étant répartis angulairement autour de l'axe de la canne de sorte que les images acquises se recouvrent angulairement. La canne peut être adaptée à être portée par un opérateur se déplaçant dans l'environnement. Elle peut comporter en partie inférieure un pied permettant de la poser sur le sol. Le dispositif peut comporter au moins trois, de préférence trois étages d'acquisition. Les caméras de chaque étage étant réparties autour de l'axe longitudinal de la canne, sur un secteur angulaire total compris entre 90° et 120°, de préférence compris entre 150° et 190°, en particulier égal à 180°. L'espacement entre les étages d'acquisition peut être réglable. Les caméras d'un étage d'acquisition sont de préférence fixes les unes par rapport aux autres. Le module d'acquisition peut comporter au moins six, de préférence au moins dix, de préférence au moins douze, notamment quinze caméras.

De préférence, les réglages optiques de la caméra sont identiques en au moins deux, de préférence en tous les emplacements d'acquisition. En particulier, la mise au point de la caméra peut être identique en tous les emplacements d'acquisition. De préférence, l'ouverture de l'objectif de la caméra et la vitesse d'obturation de la caméra sont identiques en tous les emplacements d'acquisition. On limite ainsi les écarts de contraste et de luminosité entre des images d'une même scène acquises en différents points d'acquisition.

De préférence, l'éclairage de la scène est d'intensité constante en tous les emplacements d'acquisition. Les écarts colorimétriques entre deux images se recouvrant et acquises en différents points d'acquisition sont ainsi réduits, ce qui facilite leur corrélation et la création du modèle 3D. La ou les scènes peuvent être éclairées au moyen d'au moins une lampe dont la température de couleur est constante, par exemple comprise entre 5000 K et 5500 K. La lampe peut inclure des diodes électroluminescentes.

La caméra peut acquérir un film en continu, formé de séquences chronologiques d'images. Elle peut en variante acquérir des images photographiques. Par exemple, la caméra peut être portative, par exemple de marque GoPro. Elle peut être un appareil photographique, par exemple de type réflex. Elle peut être configurée pour générer une image numérique dans un format de données d'image standard, par exemple choisi parmi le jpeg, le png, le tiff, le raw et le bmp, de préférence le raw, ou pour générer un film, par exemple au format standard choisi parmi l'avi, le mpeg et le mkv, duquel peut être extrait la séquence chronologique d'images.

Les images peuvent comporter chacune plus de 1 million, voire plus de 4 millions, voire plus de 8 millions, mieux plus de 16 millions de pixels.

Le dispositif d'acquisition peut être tel que décrit dans la demande FR 1856591, incorporée ici par référence.

Le procédé d'acquisition comporte le déplacement du dispositif d'acquisition en une pluralité de déplacements d'acquisition.

Le déplacement du dispositif d'acquisition peut être assuré par le mouvement, notamment de marche, d'un opérateur manipulant le dispositif d'acquisition. En variante, le dispositif d'acquisition peut être déplacé au moyen d'un véhicule, par exemple une voiture, ou d'un appareil volant, par exemple un drone, ou d'un engin de levage, par exemple une grue ou un treuil, sur lequel le dispositif d'acquisition est monté.

Les emplacements d'acquisition consécutifs peuvent définir un itinéraire terrestre, notamment urbain. L'itinéraire peut être souterrain, par exemple parcourant un réseau d'égouts ou des galeries. Il peut être aérien, par exemple lorsque le dispositif est monté sur un drone et que les images sont acquises en vue en plongée.

De préférence, on déplace le dispositif de scan le long d'un itinéraire défini par les emplacements d'acquisition consécutifs, puis à partir du dernier emplacement d'acquisition de l'itinéraire, on déplace le dispositif de scan en direction du premier emplacement de l'itinéraire, de manière à acquérir des scènes différentes de celles acquises lors du parcours de l'itinéraire. On augmente ainsi le nombre d'images acquises et de manière conséquente le nombre total de portions à haute résolution. En outre, on acquiert encore plus d'images d'un même élément observé en différents emplacements d'acquisition selon différents points de vue. On améliore ainsi le traitement ultérieur des images, par exemple par photogrammétrie, pour construire le modèle 3D. Les scènes acquises lors du déplacement en direction du premier emplacement incluent, de préférence, des objets inclus dans les scènes acquises lors du parcours de l'itinéraire.

Le dispositif d'acquisition est déplacé entre des premier et dernier emplacements d'acquisition. De préférence, le nombre d'arrêts entre les premier et dernier emplacements d'acquisition est inférieur à 10, de préférence inférieur à 5. Mieux, le déplacement du dispositif d'acquisition peut être effectué sans arrêt. De préférence, le dispositif de scan comporte alors une caméra acquérant un film sous la forme d'une séquence chronologique d'images. La durée totale de l'acquisition des images entre les premier et dernier emplacements d'acquisition est ainsi réduite, ce qui augmente la productivité de l'opérateur mettant en oeuvre le procédé.

En particulier, la vitesse moyenne de déplacement du dispositif d'acquisition entre les premier et dernier emplacements d'acquisition peut être supérieure à 0,4 m.s$^{-1}$. Il est ainsi possible de parcourir un long itinéraire en un temps réduit.

Par exemple, le procédé comporte le déplacement en au moins 10 emplacements d'acquisition par minute, voire en au moins 60 emplacements d'acquisition par minute, voire en au moins 100 emplacements d'acquisition par minute.

La fréquence d'acquisition des images au cours du déplacement est supérieure à 0,5 Hz, notamment supérieure à 24 Hz, en particulier lorsque les images constituent une séquence chronologique d'un film.

L'itinéraire peut suivre un trajet sensiblement unidirectionnel entre les premier et dernier emplacements d'acquisition. Par exemple, l'itinéraire peut être parcouru le long de la direction d'extension d'un tunnel. En variante, l'itinéraire peut comporter de nombreux changements de direction, par exemple lorsque l'environnement s'étend sur une surface. Par exemple, l'itinéraire peut suivre un trajet le long d'un ensemble de rues d'une ville, orientées selon plusieurs directions. Au sein d'une rue, l'itinéraire peut comporter au moins une traversée de la chaussée pour acquérir des images à partir des trottoirs opposés de la rue.

Par ailleurs, contrairement aux modèles 3D de l'art antérieur qui généralement sont obtenus à partir du maximum d'informations exploitables contenues dans les images acquises, le procédé selon l'invention met à disposition, pour la construction d'un modèle numérique 3D ultérieur, des images dont seules les portions à haute résolution peuvent être exploitées, bien que de telles images puissent comporter d'autres informations exploitables. Il est donc préférable, selon l'invention, d'acquérir un nombre d'images supérieur et, de préférence en un nombre d'emplacements d'acquisition plus élevé, par rapport au nombre d'images nécessaire pour mettre en oeuvre un procédé de l'art antérieur.

L'itinéraire peut comporter plus de 10 emplacements d'acquisition par kilomètre, de préférence plus de 100 emplacements d'acquisition par kilomètre, voire plus de 1000 emplacements d'acquisition par kilomètre, voire même plus de 10000 emplacements d'acquisition par kilomètre, voire mieux plus de 100000 emplacements d'acquisition par kilomètre, sur la base de la longueur de l'itinéraire.

L'itinéraire peut comporter plus de 10 emplacements d'acquisition, de préférence plus de 100 emplacements d'acquisition, mieux plus de 1000 emplacements d'acquisition.

L'itinéraire peut comporter plus de 1000 emplacement d'acquisition par kilomètre carré, voire plus de 10 000 emplacements d'acquisition par kilomètre carré, voire plus de 1 million d'emplacements d'acquisition par kilomètre carré, voire plus de 10 millions d'emplacements d'acquisition par kilomètre carré et la surface sur laquelle les emplacements d'acquisition sont disposés est supérieure à 1 m$^2$, voire supérieure à 100 m$^2$, voire supérieure à 1000 m$^2$, voire supérieure à 1000 m$^2$.

Plus de 1000 images, de préférence plus de 10 000 images, voire plus de 100 000 images peuvent être acquises entre les premier et dernier emplacements d'acquisition.

De préférence, on acquiert au moins 5 fois, voire au moins 10 fois, voire au moins 50 fois un même élément, par exemple un même objet, en différents emplacements d'acquisition. De cette façon, on augmente le nombre de portions à haute résolution représentant tout ou partie de l'élément dans les différentes images.

Comme cela a déjà été décrit, le procédé selon l'invention produit une banque d'images, chacune des images comportant une portion à haute résolution pouvant être traitée pour construire un modèle numérique 3D.

Ainsi, l'invention concerne encore une méthode de construction d'un modèle numérique 3D représentant au moins un objet, la méthode comportant :

- l'acquisition d'une pluralité d'images entre des premier et dernier emplacements d'acquisition au moyen du procédé selon l'invention,
- la sélection, pour chaque scène vue par la caméra, d'au moins une portion à haute résolution dans au moins une image correspondante,
- la construction d'un modèle élémentaire 3D de chaque scène vue au moyen d'au moins une portion à haute résolution correspondante, et
- l'assemblage des modèles élémentaires 3D pour réaliser le modèle numérique 3D continu entre les premier et dernier emplacements d'acquisition.

De préférence, la sélection de la ou des portions à haute résolution dans l'image correspondante comporte :

- la reconnaissance dans l'image, par exemple par corrélation d'images, de zones communes à l'image et à une autre image se recouvrant au moins partiellement avec l'image,
  l'autre image étant acquise par la caméra en un autre emplacement d'acquisition ou étant acquise par une autre caméra du dispositif d'acquisition au même emplacement d'acquisition,
- le calcul de la distance entre le plan principal objet de la caméra telle que disposée à l'emplacement d'acquisition de l'image et le ou les éléments de la scène correspondante représentés sur les zones communes de l'image, par exemple selon un algorithme de calcul stéréoscopique, de façon à déterminer la densité surfacique du ou des éléments de la scène correspondante, et
- la sélection de la ou des portions de l'image représentant des éléments de la scène correspondante auxquels sont attribués une densité surfacique supérieure à 50 %, de préférence supérieure à 80 % de la densité surfacique cible.

La construction du modèle 3D élémentaire comporte, de préférence, la discrétisation de la scène sous la forme d'un nuage de points. La discrétisation de la scène est de préférence effectuée par traitement photogrammétrique des portions à haute résolution des images représentant des éléments inclus dans la scène. De préférence, le traitement photogrammétrique inclut la corrélation numérique de portions à hautes résolutions de plusieurs images, par exemple de la totalité des images acquises à l'emplacement correspondant. Il peut être effectué à partir d'au moins deux images acquises respectivement en des emplacements d'acquisition consécutifs de l'itinéraire. Par exemple, le traitement photogrammétrique est mis en oeuvre au moyen du logiciel PhotoScan édité par la société Agisoft. L'assemblage des modèles élémentaires 3D pour réaliser le modèle numérique 3D continu peut être réalisé de la même façon.

Le modèle 3D continu est de préférence formé d'un nuage de points. Un voxel peut être défini en chaque point du nuage. Un voxel est un volume de forme parallélépipédique, de préférence cubique. La taille du voxel correspond au diamètre de la plus petite sphère circonscrite au voxel. Le voxel représente une zone de l'objet représenté par un ou plusieurs pixels dans des portions à hautes résolutions d'images. La taille du voxel dépend de la résolution des pixels correspondants.

L'invention concerne enfin une unité de stockage informatique comportant une banque d'images obtenues par le procédé d'acquisition selon l'invention. L'unité de stockage informatique peut être un disque dur ou SSD, une mémoire flash, par exemple d'une clé USB.

L'invention pourra être mieux comprise à la lecture de la description détaillée qui va suivre, d'exemples de mise en oeuvre non limitatifs de celle-ci, et à l'examen du dessin annexé, sur lequel :

-   la figure 1 représente de façon schématique un élément à imager, un objectif et un capteur d'une caméra,
-   la figure 2 illustre un environnement à acquérir selon une vue en perspective,
-   la figure 3 représente une vue selon la direction verticale V de l'environnement de la figure 3, et
-   les figures 4 et 5 sont des images des scènes de l'environnement, acquises en différents emplacements d'acquisition.

Sur la figure 2 est représenté, à des fins illustratives, un environnement 40 dans lequel est disposé un bâtiment 46 comportant une paroi 45. La paroi est courbe et comporte des inscriptions sous forme des lettres « A » à « C ». Le procédé selon l'invention est mis en oeuvre afin d'acquérir des images de différentes scènes de l'environnement.

Un dispositif d'acquisition 50 est positionné le long d'un itinéraire dont le sens de parcours est représenté par la flèche 51 entre des premier 55 et dernier 60 emplacements d'acquisition. Par souci de clarté, seuls quatre emplacements d'acquisition 55, 60 et 61, 62 sont représentés sur la figure 2, mais l'itinéraire peut en comporter un nombre plus élevé.

Le dispositif d'acquisition comporte de préférence plusieurs caméras, prenant des images différentes d'une même scène 63,64. Toutefois, par souci de clarté, l'angle de vue $\alpha$ et les images 70, 75 acquises par une seule caméra 65 sont représentées.

Le dispositif d'acquisition est positionné de manière à respecter la condition (2) décrite préalablement. De cette façon, en chaque emplacement d'acquisition, on assure que les images acquises par le dispositif comportent au moins une portion à haute résolution.

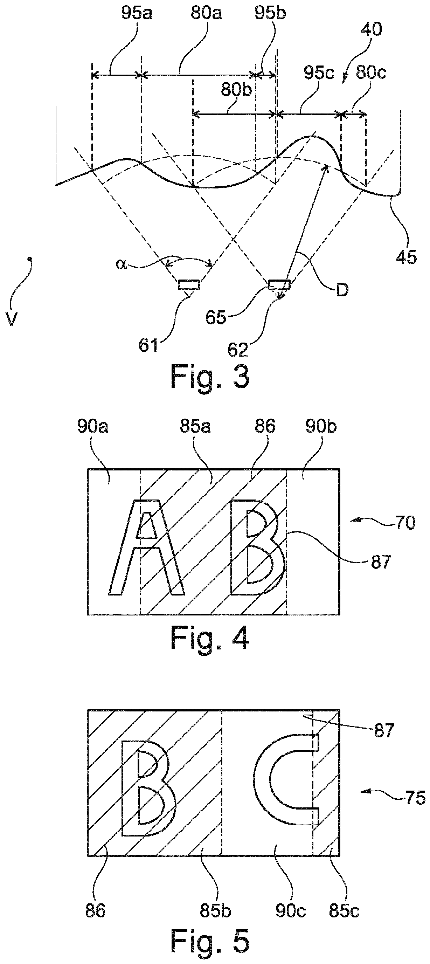

Ainsi, comme observé sur la figure 4, les portions 80a-c de la paroi représentées sur la figure 3, vues par la caméra en chaque emplacement d'acquisition, qui sont disposées à une distance inférieure ou égale à D, sont représentées dans les images correspondantes par des portions à haute résolution 85a-c, représentées en hachures 86 et délimitées par des lignes en pointillés 87. Les autres portions 90a-c des images comportent des portions dans lesquelles la densité de pixels maximale est plus faible que dans les portions 80a-c. Elles correspondent en effet à des portions 95a-c de la paroi situées à plus grande distance de la caméra à l'emplacement d'acquisition 61, 62 correspondant.

Par la suite, un modèle numérique 3D continu de l'environnement peut être généré au moyen des portions à haute résolution. Par exemple, à l'aide d'un traitement photogrammétrique des portions à haute résolution 85a et 85b, un modèle élémentaire 3D de la portion de la paroi comportant la lettre « B » peut être généré.

Lors de l'affichage du modèle numérique 3D, par exemple au moyen d'un casque de réalité augmentée, l'observateur peut se déplacer virtuellement autour de la zone de la paroi modélisée comportant la lettre « B », et y observer le même niveau de détail quelque soit le niveau d'observation.

Bien entendu, le procédé d'acquisition d'images peut être mis en oeuvre pour acquérir des images d'un environnement plus complexe que celui illustré dans le dessin. L'invention n'est pas limitée aux modes de mise en oeuvre présentés ci-dessus.

## Revendications

1.   Procédé d'acquisition d'images comportant le déplacement, en une pluralité d'emplacements d'acquisition (61,62), d'un dispositif d'acquisition (50) comportant au moins une caméra (5,65), et l'acquisition en chaque emplacement d'acquisition d'au moins une image d'une scène au moyen de la caméra, chaque emplacement d'acquisition étant choisi de manière à ce que :

- les scènes (63, 64) vues par la caméra en deux emplacements d'acquisition consécutifs et les images (70,75) correspondantes se recouvrent au moins partiellement, et
- la densité surfacique de pixels attribuée à au moins un élément de la scène correspondante qui est représenté dans l'image correspondante par une portion à haute résolution (85a-c), soit supérieure à 50 %, de préférence supérieure à 80 % d'une densité surfacique cible, la densité surfacique de pixels étant définie comme le rapport de l'aire de l'élément projeté dans un plan perpendiculaire à l'axe optique de la caméra sur la quantité de pixels de la portion à haute résolution, la densité surfacique cible étant supérieure ou égale à 50 px.mm$^{-2}$ [pixels par millimètre carré].

2. Procédé selon la revendication 1, la densité surfacique cible étant supérieure ou égale à 60 px.mm$^{-2}$, mieux comprise entre 70 px.mm$^{-2}$ et 100 px.mm$^{-2}$.

3. Procédé selon la revendication 1, dans lequel la mise au point de la caméra est identique en tous les emplacements d'acquisition et/ou l'éclairage de la scène est d'intensité constante en tous les emplacements d'acquisition.

4. Procédé selon l'une quelconque des revendications précédentes, dans lequel on déplace le dispositif d'acquisition le long d'un itinéraire (51) défini par les emplacements d'acquisition consécutifs, puis à partir du dernier emplacement d'acquisition (60) de l'itinéraire, on déplace le dispositif d'acquisition en direction du premier emplacement d'acquisition (55) de l'itinéraire, de manière à acquérir des scènes différentes de celles acquises lors du parcours de l'itinéraire.

5. Procédé selon l'une quelconque des revendications précédentes, le dispositif d'acquisition comportant au moins deux caméras, de préférence au moins cinq caméras, de préférence au moins dix caméras, mieux au moins quinze caméras, les caméras acquérant chacune une image de la scène correspondante selon un axe de vue différent des autres, les images ainsi acquises d'une même scène se recouvrant entre elles.

6. Procédé selon l'une quelconque des revendications précédentes, dans lequel le dispositif d'acquisition est déplacé entre des premier (55) et dernier (60) emplacements d'acquisition, et le nombre d'arrêts entre les premier et dernier emplacements d'acquisition est inférieur à 10, de préférence inférieur à 5, de préférence le déplacement du dispositif d'acquisition entre les premier et dernier emplacements d'acquisition s'effectuant sans arrêt.

7. Procédé selon l'une quelconque des revendications précédentes, dans lequel on déplace le dispositif d'acquisition le long d'un itinéraire (51) défini par les emplacements d'acquisition consécutifs, l'itinéraire comportant plus de 10 emplacements d'acquisition par kilomètre, de préférence plus de 100 emplacements d'acquisition par kilomètre, voire plus de 1000 emplacements d'acquisition par kilomètre, voire même plus de 10000 emplacements d'acquisition par kilomètre, voire mieux plus de 100000 emplacements par kilomètre, sur la base de la longueur de l'itinéraire.

8. Procédé selon l'une quelconque des revendications précédentes, dans lequel on déplace le dispositif d'acquisition le long d'un itinéraire (51) défini par les emplacements d'acquisition consécutifs, l'itinéraire comportant plus de 1000 emplacement d'acquisition par kilomètre carré, voire plus de 10 000 emplacements d'acquisition par kilomètre carré, voire plus de 1 million d'emplacements d'acquisition par kilomètre carré, voire plus de 10 millions d'emplacements d'acquisition par kilomètre carré et la surface sur laquelle les emplacements d'acquisition sont disposés est supérieure à 1 m$^2$, voire supérieure à 100 m$^2$, voire supérieure à 1000 m$^2$, voire supérieure à 1000 m$^2$.

9. Procédé selon l'une quelconque des revendications précédentes, dans lequel on acquiert au moins 5 fois, voire au moins 10 fois, voire au moins 50 fois un même élément en différents emplacements d'acquisition.

10. Procédé selon l'une quelconque des revendications précédentes, dans lequel la vitesse moyenne de déplacement du dispositif d'acquisition entre les premier et dernier emplacements d'acquisition est supérieure à 0,4 m.s$^{-1}$.

11. Procédé selon l'une quelconque des revendications précédentes, comportant le déplacement en au moins 10 emplacements d'acquisition par minute, voire en au moins 60 emplacements d'acquisition par minute, voire en au moins 100 emplacements d'acquisition par minute.

12. Procédé selon l'une quelconque des revendications précédentes, dans lequel la fréquence d'acquisition des images au cours du déplacement est supérieure à 0,5 Hz, notamment supérieure à 24 Hz.

13. Procédé selon l'une quelconque des revendications précédentes, la portion à haute résolution représentant plus de 20 % du nombre total de pixels définissant l'image, et de préférence moins de 100 % du nombre total de pixels définissant l'image.

14. Procédé selon l'une quelconque des revendications précédentes, la densité surfacique de pixels attribuée à l'élément de la scène correspondante qui est représenté dans l'image correspondante par la portion à haute résolution, est supérieure à la densité surfacique cible.

15. Méthode de construction d'un modèle numérique 3D représentant au moins un objet, comportant

- l'acquisition d'une pluralité d'images entre des premier et dernier emplacements d'acquisition au moyen du procédé selon l'une quelconque des revendications précédentes,
- la sélection, pour chaque scène acquise, d'au moins une portion à haute résolution dans au moins une image correspondante,
- la construction d'un modèle élémentaire 3D de chaque scène acquise au moyen de la portion à haute résolution, et
- l'assemblage des modèles élémentaires 3D pour réaliser le modèle numérique 3D continu entre les premier et dernier emplacements d'acquisition.

16. Méthode selon la revendication précédente, dans lequel la sélection de la ou des portions à haute résolution de l'image comporte :

- la reconnaissance dans l'image, par exemple par corrélation d'images, de zones communes à l'image et à une autre image se recouvrant au moins partiellement avec l'image, l'autre image étant acquise par la caméra en un autre emplacement d'acquisition ou étant acquise par une autre caméra du dispositif d'acquisition au même emplacement d'acquisition,
- le calcul de la distance entre le plan principal objet de la caméra telle que disposée à l'emplacement d'acquisition de l'image et les éléments de la scène correspondante représentés sur les zones communes de l'image, par exemple selon un algorithme de calcul stéréoscopique, de façon à déterminer la densité surfacique des éléments de la scène correspondante, et
- la sélection de la ou des portions de l'image représentant des éléments de la scène correspondante auxquels sont attribués une densité surfacique supérieure à 50 %, de préférence supérieure à 80 % de la densité surfacique cible.

Fig. 1

Fig. 2

Fig. 3

Fig. 4

Fig. 5

Europäisches
Patentamt

European
Patent Office

Office européen
des brevets

## RAPPORT DE RECHERCHE EUROPEENNE

Numéro de la demande

EP 19 20 1285

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/013927 A1 (NIXON STUART WILLIAM [AU]) 21 janvier 2010 (2010-01-21)<br>* alinéas [0029], [0047], [0077] *<br>* figure 1 *<br>* figure 5D *<br>----- | 1-16 | INV.<br>G01C11/02<br>G06T17/00 |
| X | US 2016/057345 A1 (LAPSTUN PAUL [AU] ET AL) 25 février 2016 (2016-02-25)<br>* alinéa [0349] - alinéa [0353] *<br>* alinéa [0376] - alinéa [0378] *<br>* figure 60 *<br>* figures 1-8 *<br>* alinéa [0348]; figure 19 *<br>* alinéa [0403] - alinéa [0404] *<br>----- | 1-16 | |
| X | US 2010/295855 A1 (SASAKAWA TADASHI [JP] ET AL) 25 novembre 2010 (2010-11-25)<br>* alinéas [0009], [0010], [0013] - [0015], [0023] *<br>* figures 1A, 1B *<br>----- | 1-16 | |
| | | | **DOMAINES TECHNIQUES RECHERCHES (IPC)**<br>G06F<br>G01C<br>G06T |

Le présent rapport a été établi pour toutes les revendications

| Lieu de la recherche | Date d'achèvement de la recherche | Examinateur |
|---|---|---|
| La Haye | 28 février 2020 | Vanhaecke, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

# EP 3 640 586 A1

## ANNEXE AU RAPPORT DE RECHERCHE EUROPEENNE
## RELATIF A LA DEMANDE DE BREVET EUROPEEN NO.

EP 19 20 1285

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-02-2020

| Document brevet cité au rapport de recherche | Date de publication | Membre(s) de la famille de brevet(s) | Date de publication |
|---|---|---|---|
| US 2010013927 A1 | 21-01-2010 | AU 2010219335 A1 | 30-09-2010 |
| | | CA 2773303 A1 | 31-03-2011 |
| | | CN 102612636 A | 25-07-2012 |
| | | EP 2480860 A1 | 01-08-2012 |
| | | JP 6321077 B2 | 09-05-2018 |
| | | JP 2013505457 A | 14-02-2013 |
| | | JP 2016180761 A | 13-10-2016 |
| | | KR 20120092109 A | 20-08-2012 |
| | | RU 2012116074 A | 27-10-2013 |
| | | US 2010013927 A1 | 21-01-2010 |
| | | US 2013235199 A1 | 12-09-2013 |
| | | WO 2011036541 A1 | 31-03-2011 |
| | | ZA 201201800 B | 29-05-2013 |
| US 2016057345 A1 | 25-02-2016 | AU 2015243032 A1 | 21-01-2016 |
| | | CA 2952933 A1 | 23-12-2015 |
| | | CN 106662804 A | 10-05-2017 |
| | | EP 3158396 A1 | 26-04-2017 |
| | | ES 2724464 T3 | 11-09-2019 |
| | | JP 6541779 B2 | 10-07-2019 |
| | | JP 2017520002 A | 20-07-2017 |
| | | US 9185290 B1 | 10-11-2015 |
| | | US 2016057345 A1 | 25-02-2016 |
| | | WO 2015192188 A1 | 23-12-2015 |
| US 2010295855 A1 | 25-11-2010 | CN 101919235 A | 15-12-2010 |
| | | EP 2247094 A1 | 03-11-2010 |
| | | JP 4970296 B2 | 04-07-2012 |
| | | JP 2009177251 A | 06-08-2009 |
| | | US 2010295855 A1 | 25-11-2010 |
| | | WO 2009093587 A1 | 30-07-2009 |

EPO FORM P0460

Pour tout renseignement concernant cette annexe : voir Journal Officiel de l'Office européen des brevets, No.12/82

12

**EP 3 640 586 A1**

## RÉFÉRENCES CITÉES DANS LA DESCRIPTION

### Documents brevets cités dans la description

- FR 1856591